# FASCICULE DE BREVET EUROPEEN

(11) **EP 0 444 997 B1**
(45) Date de publication et mention de la délivrance du brevet: **01.02.1995**
(21) Numéro de dépôt: 91400432.0
(22) Date de dépôt: 19.02.1991
(51) Int. Cl.: H02J 1/10, B60R 16/02

(54) **Dispositif de commande de l'alimentation électrique d'une pluralité de modules électroniques**
Steuerschaltung für die Energieversorgung einer Mehrzahl elektronischer Module
Circuit for controlling the power supply of a plurality of electronic modules

(30) Priorité: 01.03.1990 FR 9002570
(43) Date de publication de la demande: 04.09.1991
(73) Titulaire: REGIE NATIONALE DES USINES RENAULT S.A., 92109 Boulogne Billancourt (FR)
(72) Inventeur: Millereau, Jean-Luc, F-78400 Chatou (FR); Lenoir, Dominique, F-92360 Meudon-La-Forêt (FR)
(74) Mandataire: Ernst-Schonberg, Michel

(56) Documents cités:
- EP-A- 0 193 485
- EP-A- 0 194 915
- EP-A- 0 327 456
- DE-A- 3 520 516
- FR-A- 2 445 769

## Description

La présente invention est relative à un dispositif de commande de l'alimentation électrique d'une pluralité de modules électroniques et, plus particulièrement, à un tel dispositif permettant de commander sélectivement cette alimentation suivant que le dispositif est en état de veille ou à l'état actif.

Les véhicules automobiles actuels sont de plus en plus chargés en modules électroniques associés à des capteurs et actionneurs pour assurer des fonctions de commande d'organes tels que phares, essuie-glaces, afficheurs d'ordinateurs de bord, etc... ou de dispositifs de commande d'injection de carburant dans un moteur à combustion interne propulsant le véhicule, de commande de suspension adaptative ou d'antiblocage des roues du véhicule. On envisage maintenant d'alimenter électriquement ces modules avec une ligne, ou bus, d'alimentation commune et d'interconnecter les modules avec un système local de communications multiplexées comprenant un bus de données commun à tous les modules.

Lorsque le véhicule fonctionne, un tel système multiplexé est fortement consommateur d'énergie et peut tirer sur la batterie de 2 à 25 ampères par exemple, en fonction des prestations électriques sollicitées.

Quand le véhicule est à l'arrêt, il convient de limiter la consommation électrique à une valeur faible (inférieure à 3 milliampères par exemple) pour économiser l'énergie stockée dans la batterie. La publication EP-A-0 327 456 propose la mise en état opérationnel et un état de veille des boîtiers électroniques par l'intermédiaire de messages circulant dans un canal de communication auquel ces boîtiers sont reliés. Il faut pour cela cesser d'alimenter les modules par le bus d'alimentation en isolant celui-ci de la batterie. Lorsque le système est ainsi mis en état de "veille", il faut cependant que la sollicitation de certaines fonctions soit susceptible de "réveiller" l'ensemble du système. C'est le cas par exemple lorsque le conducteur actionne une clé de contact pour faire démarrer le véhicule. Il est alors nécessaire que certaines parties des modules restent alimentées en état de veille, pour permettre le "réveil" du système.

Suivant une procédure connue, on surveille alors le courant consommé en état de veille, un dépassement par ce courant d'un niveau prédéterminé étant considéré comme significatif d'une activité telle que ce dépassement déclenche alors le réveil de l'ensemble du système.

Une telle procédure présente divers inconvénients. En effet, le seuil est alors fonction du nombre de modules ou stations qui sont susceptibles de réveiller le système. Ce seuil doit alors être ajusté en fonctions des "options" présentes dans le véhicule, options dont on sait qu'elles sont choisies arbitrairement par le propriétaire du véhicule dans une liste d'options mises à sa disposition par le constructeur.

En outre la détection d'un dépassement d'un seuil de courant ne permet pas d'identifier le module qui est à l'origine du réveil du système. Une telle identification serait pourtant avantageuse en ce qu'elle permettrait de rechercher en priorité la fonction qui est à l'origine du réveil.

Il faut noter encore que la détection du franchissement d'un seuil de courant, de caractère analogique, implique l'emploi de circuits à seuil réalisés en composants passifs. On sait que ceux-ci présentent des caractéristiques électriques affectées de grandes dispersions et de dérives dans le temps. De tels composants sont également sensibles aux fortes perturbations électromagnétiques que l'on observe dans l'environnement d'un véhicule automobile.

La présente invention a donc pour but de réaliser un dispositif de commande de l'alimentation électrique d'une pluralité de modules électroniques, qui ne présente pas ces inconvénients des dispositifs de la technique antérieure.

En particulier, la présente invention a pour but de réaliser un tel dispositif équipé de moyens de réveil de l'ensemble du dispositif qui n'exigent pas de réglages en fonction de la consommation des modules susceptibles de réveiller le dispositif.

La présente invention a aussi pour but de réaliser un tel dispositif qui soit bien immunisé vis-à-vis des bruits dûs aux perturbations électriques et électromagnétiques présentes dans l'environnement d'un véhicule automobile.

La présente invention a encore pour but de réaliser un tel dispositif qui comprenne des moyens d'identification du module qui est à l'origine du réveil du dispositif.

On atteint ces buts de l'invention, ainsi que d'autres qui apparaîtront dans la suite de la présente description, avec un dispositif de commande de l'alimentation électrique d'une pluralité de modules électroniques interconnectés par un bus de données avec une unité centrale de traitement de données, du type qui comprend une ligne commune d'alimentation électrique des modules, ce dispositif étant remarquable en ce qu'il comprend des moyens installés dans l'unité centrale et sensibles à un état prédéterminé du dispositif pour commander sa mise en état de veille en coupant l'alimentation des modules par la ligne commune et en assurant alors l'alimentation électrique d'au moins un circuit de génération de signaux de réveil formant partie d'un module, par l'intermédiaire d'au moins une ligne du bus de données, et des moyens sensibles aux signaux de réveil émis par le circuit de génération de tels signaux, pour couper l'alimentation des modules par le bus de données et pour rétablir l'alimentation des modules par la ligne commune d'alimentation électrique.

En coupant ainsi, en période de veille, l'alimentation générale des modules par cette ligne, on réduit beaucoup la consommation du dispositif. Pour assurer cependant alors l'alimentation des parties des modules qui doivent rester sous tension pour la commande du réveil du dispositif, on utilise à cet effet le bus de données, de manière inattendue, celui-ci étant normalement destiné à un tout autre usage.

Suivant l'invention, au moins un des modules comprend un moyen pour déclencher sélectivement un circuit de génération de signaux de réveil associé, un circuit de couplage associé à ce circuit de génération pour transmettre ces signaux sur le bus de données et un circuit de détection interposé entre le bus et l'unité centrale et sensible à ces signaux pour transmettre à l'unité centrale une information de commande du réveil du dispositif.

Le dispositif comprend en outre un régulateur de tension mis en service par l'unité centrale à la coupure de l'alimentation des modules par la ligne d'alimentation commune, pour alimenter le circuit détection et, à travers le bus de données, le circuit de couplage et le circuit de génération de signaux de réveil de chaque module équipé de tels circuits.

Le circuit de génération de signaux de réveil engendre une séquence d'impulsions, le circuit de couplage comprenant un moyen pour moduler, sous la commande de cette séquence, le courant circulant dans la ligne du bus de données utilisé pour l'alimentation d'une partie du module en période de veille, le circuit de détection étant sensible à ce courant modulé pour transmettre une information de réveil à l'unité centrale.

Suivant un mode de réalisation avantageux du dispositif selon l'invention, le moyen de modulation est un transistor dont le circuit émetteur-collecteur est connecté entre la masse et la ligne du bus de données qui sert de ligne d'alimentation en période de veille, le circuit de génération de signaux de réveil commandant la base de ce transistor pour moduler le courant dans cette ligne.

Suivant une caractéristique avantageuse du dispositif selon l'invention, la séquence d'impulsions émise par un module est particulière à celui-ci et l'unité centrale comprend des moyens d'identification du module émetteur de la séquence, à partir du signal transmis par le circuit de détection.

D'autres caractéristiques et avantages du dispositif selon l'invention apparaîtront à la lecture de la description qui va suivre et à l'examen du dessin annexé dans lequel :
- la figure 1 est un diagramme fonctionnel du dispositif de commande d'alimentation électrique suivant l'invention, et
- la figure 2 est un schéma électrique d'un circuit de couplage interposé entre un circuit de génération de signaux de réveil et le bus de données qui interconnecte les différents modules électroniques formant partie du dispositif suivant l'invention.

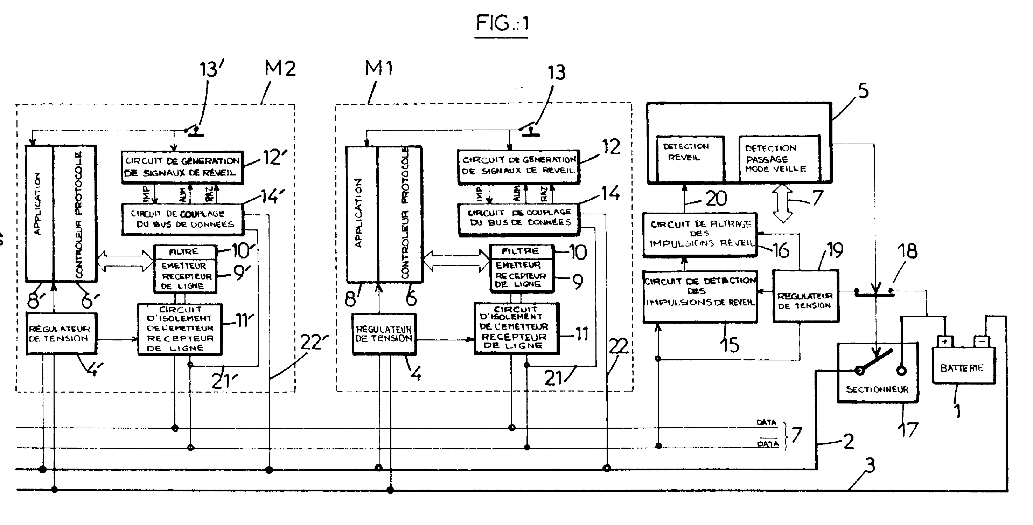

On se réfère à la figure 1 du dessin annexé où il apparaît que le dispositif de commande suivant l'invention comprend plusieurs modules électroniques M1, M2, etc... alimenté par une source d'énergie électrique continue 1 par l'intermédiaire de deux lignes communes 2, 3 respectivement connectées aux bornes positive et négative de la source 1. Dans le cas où le dispositif est embarqué dans un véhicule automobile, la source d'énergie électrique est constituée par la batterie du véhicule. Les lignes 2, 3 constituent ainsi un " bus d'alimentation" sur lequel sont connectés des régulateurs de tension 4, 4′ etc... formant partie chacun d'un des modules M1, M2, respectivement, pour en assurer l'alimentation électrique après réveil dudit module, comme on le verra dans la suite de la présente description.

Les modules assurent chacun une application particulière. A titre d'exemple, un module électronique peut être associé à un bloc de manettes placé dans un véhicule automobile à proximité du volant, pour permettre au conducteur de commander l'émission d'ordres d'activation/désactivation de divers organes du véhicule. Un autre module peut aussi être associé à un bloc optique du véhicule pour traiter des ordres d'allumage/extinction de phares, de feux de position, etc... Tous les modules sont interconnectés entre eux et avec une unité centrale de traitement de données 5, comme c'est le cas notamment dans un réseau multiplex "de carrosserie" ou de "classe A" où cette unité centralise l'intelligence nécessaire à l'exécution des diverses fonctions de commande de phares, de feux, d'essuie-glaces, d'affichage de données sur un ordinateur de bord, etc....

Pour l'exécution des fonctions qui lui sont assignées, un module M1, M2 comprend un contrôleur de protocole 6,6′ interposé entre un bus de données 7 commun à tous les modules et à l'unité centrale 5, et des moyens 8,8′ respectivement, constituant chacun un circuit d'application spécifique aux fonctions exécutées (allumage ou extinction d'une ampoule, comptage d'impulsions pour déterminer la distance parcourue et la vitesse du véhicule, etc...).

Suivant un mode de réalisation préféré de l'invention, le bus de données est un bus à deux lignes (DATA, D̅A̅T̅A̅ ) alimentées par des signaux numériques différentiels, notamment pour des raisons d'immunité aux bruits.

Le contrôleur de protocole 6,6′ de chaque module M1, M2, règle les échanges d'informations entre le bus de données et le circuit d'application 8, 8′ associé. Celui-ci peut, à titre d'exemple, être réalisé en logique câblée de très grande intégration (VLSI, suivant la terminologie anglo-saxonne).

Certains modules peuvent être équipés de moyens conçus pour déclencher le réveil de l'ensemble du dispositif, alors que d'autres modules ne sont pas équipés de tels moyens. A titre d'exemple, un module associé au bloc de manettes d'un véhicule automobile, doit être équipé de tels moyens de réveil car c'est dans ce bloc que le conducteur introduit une clé de contact pour commander le démarrage du moteur. La rotation de cette clé doit provoquer le réveil du dispositif, à partir d'un état de veille établi précédemment pour réduire au minimum la consommation électrique du véhicule, pendant un arrêt de celui-ci par exemple. D'autres modules doivent aussi être capables de réveiller le dispositif, par exemple un module associé à un système de défense du véhicule contre des intrusions. L'invention s'intéresse en particulier à l'organisation de modules tels que les modules M1 ou M2.

Dans ces modules, le contrôleur de protocole est interconnecté au bus de données 7 à travers un émetteur-récepteur de ligne 9, 9′, éventuellement associé à filtre 10, 10′, un circuit d'isolement 11, 11′ de l'émetteur-récepteur étant en outre prévu pour un but que l'on expliquera plus loin. Ce dernier circuit est lui-même alimenté par le régulateur de tension 4, 4′, tout comme le contrôleur de protocole 6, 6′.

Les modules M1 et M2 comprennent en outre chacun un circuit de génération de signaux de réveil 12, 12′, respectivement, activés par un moyen de déclenchement tel qu'un interrupteur 13, 13′. Un tel interrupteur peut être fermé par l'introduction d'une clé de contact dans la serrure d'un bloc de manettes d'un véhicule automobile, comme on l'a vu plus haut. L'introduction d'une telle clé étant significative d'une action de mise en marche du véhicule, il faut alors "réveiller" les modules électroniques qui commandent divers actionneurs incorporés à ce véhicule. Suivant l'invention, ce réveil est provoqué par l'émission d'une séquence de signaux engendrés par le circuit de génération 12 et transmis à l'unité centrale 5 par l'intermédiaire d'un circuit de couplage 14 (ou 14′ dans le module M2), d'un circuit de détection 15 et d'un éventuel circuit de filtrage 16.

Suivant une caractéristique essentielle du dispositif selon l'invention, on réduit la consommation électrique de l'ensemble des modules en période de veille, en coupant l'alimentation de ces modules par le bus d'alimentation 2, 3 et en alimentant alors seulement les circuits nécessaires au réveil de l'ensemble, par l'intermédiaire du bus de données. On peut choisir à cet effet une seule des lignes de ce bus, par exemple la ligne D̅A̅T̅A̅, comme représenté à la figure 1 où il apparaît que cette ligne alimente les circuits de couplage 14, 14′ par l'intermédiaire de lignes de connexion 21, 21′, respectivement. Cette alimentation se substitue alors à celle établie en période d'activité complète des modules, par des lignes de connexion 22, 22′ à la ligne 2 du bus d'alimentation.

L'alimentation en période de veille des seuls circuits nécessaires à l'émission et au traitement des signaux de réveil, permet de réduire considérablement la consommation électrique des modules par rapport à celle que l'on observe lorsque tous les modules électroniques sont en activité, (couramment, de 2 à 25 ampères). On peut alors réduire en période de veille, à moins de 3 mA par exemple, la consommation en courant du dispositif, tirée de la batterie du véhicule, consommation qui est considérée comme supportable par celle-ci pendant de longues périodes, correspondant à celles pendant lesquelles le véhicule n'est pas en service.

Il faut donc, lorsque le véhicule passe d'une période d'activité à une période d'inactivité, commuter l'alimentation des modules, du bus d'alimentation vers le bus de données. Ce passage peut être facilement détecté par exemple par le retrait de la clé de contact du bloc de manettes. L'unité centrale 5 ainsi prévenue, ouvre un sectionneur 17 qui coupe la connexion de la ligne 2 à la batterie 1 et ferme un interrupteur 18 pour assurer la connexion à la batterie d'un régulateur de tension 19 qui alimente la ligne D̅A̅T̅A̅ du bus de données, le circuit de détection 15 et le circuit de filtrage 16. Les circuits 12, 12′ et 14, 14′ des modules M1 et M2 respectivement sont alors alimentés par la ligne D̅A̅T̅A̅ alors que les régulateurs de tension 4, 4′ cessent d'être alimentés par la batterie, la ligne 2 étant coupée. Il s'ensuit que les contrôleurs de protocole 6, 6′ et les circuits d'application 8, 8′ normalement alimentés par les régulateurs 4, 4′ cessent d'être alimentés ce qui réduit beaucoup le courant demandé à la batterie.

Suivant une mise en oeuvre avantageuse de la présente invention, les circuits d'isolement 11, 11′ sont normalement alimentés par les régulateurs 4, 4′ respectivement, pour assurer la transmission d'informations venues du bus de données 7 vers les contrôleurs de protocole 6, 6′ respectivement. A la mise en état de veille du dispositif selon l'invention, l'alimentation de ces circuits est coupée, pour empêcher que du courant venu, en état de veille, de la ligne DATA ne vienne alimenter les contrôleurs de protocole 6, 6′ à travers les émetteur-récepteurs de ligne 9, 9′.

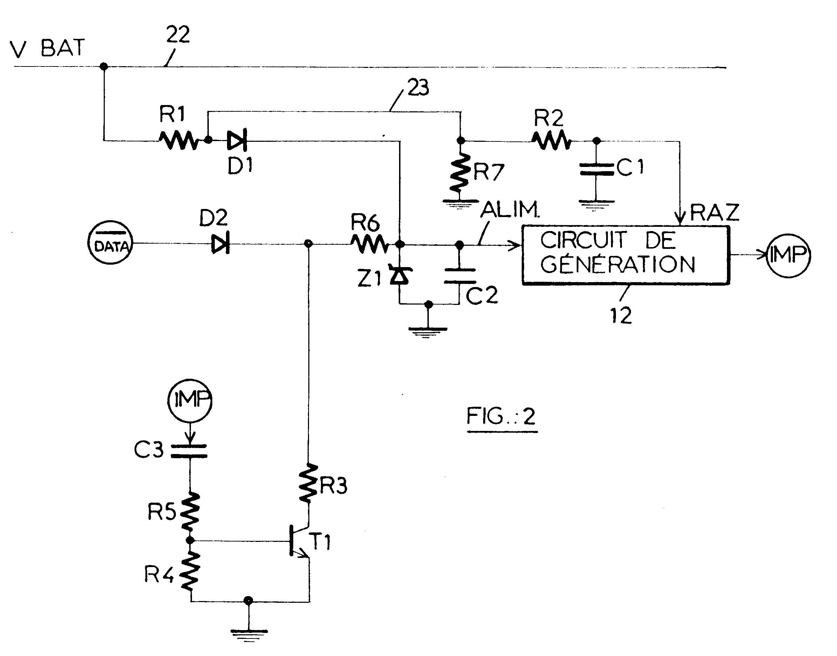

L'alimentation du dispositif étant ainsi réglée pour un état de veille, seuls les circuits 12, 12′, 14, 14′, 15 et 16 restent actifs. A la fermeture de l'interrupteur 13 par exemple, significative du fait que l'ensemble des modules doit être réactivé, le circuit 12 alimenté en énergie électrique par une ligne ALIM par l'intermédiaire du circuit de couplage 14, fournit à celui-ci une séquence de signaux "de réveil". Le circuit de couplage 14, qui sera décrit plus loin en détail en liaison avec la figure 2, module alors le courant d'alimentation qu'il reçoit de la ligne D̅A̅T̅A̅ par la ligne de commande 15, suivant la séquence de signaux reçue du circuit 12, de manière à établir sur la ligne D̅A̅T̅A̅ des signaux de courant propres à être lus par le circuit de détection 15 et filtrés par le circuit 16, avant d'être transmis à l'unité centrale 5 par une ligne 20. Le filtrage a pour but d'éliminer des impulsions parasites de durée non calibrées, induites par un éventuel parasitage électromagnétique du bus de données.

Suivant une caractéristique avantageuse du dispositif selon l'invention, la séquence de signaux émise par le circuit 12 est particulière au module dont elle est originaire et l'unité centrale peut alors identifier ce module par la reconnaissance de la séquence particulière qui lui est attachée. Cette identification donne à l'unité centrale la possibilité de moduler le réveil du dispositif en fonction de l'origine de l'action de réveil, comme on l'a vu plus haut en préambule de la présente description.

Un logiciel de "détection de réveil" implanté dans l'unité centrale 5 décode la séquence de signaux reçue de la ligne 20 et commande en retour la fermeture du sectionneur 17 et l'ouverture de l'interrupteur 18, pour rétablir l'alimentation des modules par le bus d'alimentation, comme il convient en fonctionnement normal de ces modules.

Pour commander, en sens inverse, le passage de l'alimentation du dispositif en mode "veille", l'unité centrale comprend un autre logiciel conçu pour analyser les signaux multiplexés reçus par le bus de données 7, pour en déduire un éventuel passage à l'état inactif du véhicule et commuter alors l'alimentation de ce dispositif dans la configuration "veille". Pour ce faire, ce logiciel peut être sensible par exemple, à l'absence, pendant un temps prédéterminé, de signaux normalement reçus de certains capteurs ou actionneurs, absence significative d'une inactivité du véhicule. Comme on l'a vu plus haut, le retrait de la clé de contact est une action significative d'un passage à l'état inactif du véhicule qui peut être détecté et interprété en ce sens par le logiciel de "détection de passage en mode veille".

Ayant ainsi décrit le fonctionnement du dispositif de commande selon l'invention, tant dans son passage en état de veille que dans son réveil à partir d'un tel état, comme suite à une action de réveil détectée par l'interrupteur 13 du module M1, il n'est pas besoin de répéter cette description pour le module M2 qui est composé de circuits identiques à ceux du module M1 et qui fonctionne de même.

Avant de passer à la description de la structure et du fonctionnement du circuit de couplage 14 introduit entre le circuit 12 et le bus de données 7, il est utile de revenir sur la nature des signaux véhiculés par ce bus de données.

Suivant une mise en oeuvre avantageuse de la présente invention, on préfère travailler sur ce bus "en courant" plutôt qu'en tension car, dans le milieu fortement perturbé du point de vue électromagnétique que constitue un véhicule automobile, on s'affranchit ainsi de nombre de signaux de tension parasites induits électromagnétiquement dans le bus-par l'environnement. Les informations circulant sur le bus de données sous forme d'impulsions de courant, le rôle des émetteur-récepteurs de ligne est d'assurer une conversion courant/tension de ces impulsions pour les rendre intelligibles aux contrôleurs de protocole et une conversion tension/courant d'un contrôleur vers le bus.

On remarquera encore que le fait de travailler en courant sur le bus de données permet éventuellement de se passer de l'interrupteur 18. Le bus de données est alors alimenté en permanence par le régulateur de tension, en état de veille ou en fonctionnement normal, ce qui est sans incidence sur la détection des impulsions de courant circulant dans ce bus.

On se réfère à la figure 2 du dessin annexé où on a représenté un schéma d'un circuit de couplage tel que le circuit 14 du module M1. Ce circuit est connecté par une ligne 22 à la ligne 2 du bus d'alimentation reliée au pôle positif de la batterie 1. Le circuit est aussi connecté à la ligne D̅A̅T̅A̅ du bus de données 7 par la ligne 21 et assure l'alimentation du circuit de génération 12 des signaux de réveil par la ligne ALIM, ce circuit 12 délivrant des impulsions correspondantes IMP au circuit de couplage, pour moduler le courant dans la ligne D̅A̅T̅A̅ comme on l'expliquera plus loin.

Le circuit de génération 12 exige une remise à zéro RAZ synchrone avec le passage du dispositif en état de veille. A ce passage, la ligne 22 passe à un niveau de tension bas et ce niveau est transmis à l'entrée RAZ du circuit 12 par une ligne 23, à travers un circuit de filtrage (C1, R2) propre à absorber l'impulsion de tension qui apparaît au démarrage du moteur du véhicule. Des résistances R1 et R7 de charge sont introduites entre la ligne 22 et la ligne 23 d'une part, entre l'entrée du filtre (C1, R2) et la masse d'autre part.

La ligne 22 est connectée à la ligne ALIM d'alimentation du circuit 12 par l'intermédiaire d'une diode D1. Une diode de Zener Z1, de 10 volts de tension de claquage par exemple, protège le circuit 12 de surtensions sur la ligne 22. Réalisé en technologie CMOS actuelle, le circuit 12 peut supporter des tensions jusqu'à 18 volts. Il est donc bien protégé par la diode de Zener Z1.

Une capacité C2 est placée en parallèle sur la diode Z1, entre l'entrée ALIM du circuit 12 et la masse. La capacité C2 filtre des perturbations transitoires de l'alimentation.

En mode veille l'alimentation du circuit 12 est assurée par la ligne D̅A̅T̅A̅ connectée à l'entrée ALIM du circuit par l'intermédiaire d'une diode D2 et d'une résistance R6 formant partie d'un circuit de filtrage (C2, R6). Cette tension d'alimentation est de +5 volts par exemple. La diode Z1 est alors bloquée et ne consomme pas. La diode D1 est aussi bloquée et évite le passage du courant de la ligne D̅A̅T̅A̅ vers la ligne 22.

Lorsque le système n'est pas en mode veille, la diode D1 évite que la tension d'alimentation du circuit 12 ne suive la tension de la batterie lorsque celle-ci chute brutalement (lors du démarrage du véhicule par exemple) et assure alors le blocage de la diode D2.

La section de couplage proprement dite du circuit 14 est constituée par un transistor T1, du type NPN par exemple, dont le circuit collecteur-émetteur est connecté entre la ligne D̅A̅T̅A̅ et la masse. Une résistance de charge R3 est placée sur le collecteur du transistor T1. La base du transistor T1 est connectée au point milieu d'un diviseur de tension constitué de résistances (R4, R5), une capacité C3 transmettant à ce pont les impulsions de tension IMP constituant une séquence d'impulsions de réveil émises par le circuit 12 à la suite de la fermeture de l'interrupteur 13 (voir figure 1). La capacité C3 a pour fonction de bloquer la consommation du circuit 12 si la sortie de celui-ci se bloque à l'état logique 1.

Ainsi la conduction du transistor T1 est-elle modulée par les impulsions de réveil IMP. Le transistor T1 module alors en conformité avec ces impulsions le courant dans la ligne D̅A̅T̅A̅. Les impulsions de courant ainsi introduites sur cette ligne sont lues par le circuit de détection 15 et filtrées par le circuit 16 qui délivre à l'unité centrale 5 des signaux logiques qui sont décodés par celle-ci et convertis en une commande du réveil du dispositif suivant l'invention, par fermeture du sectionneur 17.

A titre d'exemple non limitatif, on peut choisir les valeurs des résistances R3, R4 et R5 de manière que le transistor T1 établisse une impulsion de courant de 27 mA d'amplitude dans la ligne D̅A̅T̅A̅ quand le signal délivré par la sortie IMP du circuit 12 est au niveau logique 1. La capacité C3 peut être choisie de manière à limiter la consommation de courant à un intervalle de temps de 10 ms, en cas de blocage de l'entrée IMP à l'état haut.

Dans le mode de réalisation envisagé plus haut où la ligne D̅A̅T̅A̅ est constamment alimentée par le régulateur 19 (pas d'interrupteur 18), le fait de travailler en courant sur le bus de données permet de ne pas faire chuter la tension nominale du bus lorsque le dispositif n'est pas en mode veille. De cette manière on s'affranchit des capacités parasites pouvant exister entre le bus de données et le châssis du véhicule.

Il apparaît maintenant que les buts annoncés du dispositif suivant l'invention sont atteints, à savoir :
- limiter la consommation de courant du dispositif en état de veille,
- disposer d'un matériel réalisé avec des circuits numériques dont le fonctionnement ne dépend pas de dérives en température de composants électroniques,
- disposer d'un matériel qui n'exige pas de réglage en fonction du nombre de modules interconnectés dans le dispositif,
- protéger le dispositif des effets de perturbations électriques ou électromagnétiques induites et/ou de variations de la tension de la batterie,
- permettre l'identification du module qui est à l'origine d'un réveil du dispositif.

Bien entendu l'invention n'est pas limitée au mode de réalisation décrit et représenté qui n'a été donné qu'à titre d'exemple.

## Revendications

1. Dispositif de commande de l'alimentation électrique d'une pluralité de modules électroniques (M1, M2) interconnectés par un bus de données (7) avec une unité centrale (5) de traitements de données, du type qui comprend une ligne (2) commune d'alimentation électrique des modules, caractérisé en ce qu'il comprend des moyens installés dans l'unité centrale (5) et sensibles à un état prédéterminé du dispositif pour commander sa mise en état de veille en coupant l'alimentation des modules (M1, M2) par la ligne commune (2) et en assurant alors l'alimentation électrique d'au moins un circuit de génération (12, 12′) de signaux de réveil formant partie d'un module, par l'intermédiaire d'au moins une ligne (D̅A̅T̅A̅) du bus de données, et des moyens sensibles (15, 16, 5) aux signaux de réveil émis par le circuit (12, 12′) de génération de tels signaux, pour couper l'alimentation des modules par le bus de données (7) et pour rétablir l'alimentation des modules par la ligne commune (2) d'alimentation électrique.

2. Dispositif conforme à la revendication 1, caractérisé en ce que l'unité centrale (5) comprend des moyens logiciels pour détecter un état de veille à partir d'un traitement d'informations émises par les modules et transmises à l'unité centrale (5) par le bus de données (7).

3. Dispositif conforme à la revendication 2, caractérisé en ce qu'au moins un des modules comprend un moyen (13, 13′) pour déclencher sélectivement un circuit (12, 12′) associé de génération de signaux de réveil, un circuit de couplage (14, 14′) associé à ce circuit de génération pour transmettre ces signaux sur le bus de données (7) et un circuit de détection (15) interposé entre le bus (7) et l'unité centrale (5) et sensible à ces signaux pour transmettre à l'unité centrale (5) une information de commande du réveil du dispositif.

4. Dispositif conforme à la revendication 3, caractérisé en ce qu'il comprend un régulateur de tension (19) mis en service par l'unité centrale (5) à la coupure de l'alimentation des modules par la ligne d'alimentation commune (2), pour alimenter le circuit de détection (12, 12′) et, à travers le bus de données (7), le circuit de couplage (14, 14′) et le circuit de génération de signaux de réveil (12, 12′) de chaque module équipé de tels circuits.

5. Dispositif conforme à l'une quelconque des revendications 3 et 4, caractérisé en ce que chacun desdits modules (M1, M2) comprend en outre un circuit (11, 11′) commandé par la mise en état de veille du dispositif pour isoler le reste du module de l'alimentation établie alors par le bus de données (7).

6. Dispositif conforme à la revendication 5, caractérisé en ce que chacun desdits modules (M1, M2) comporte un contrôleur de protocole (6, 6′) interconnecté avec le bus de données (7) par l'intermédiaire d'un émetteur-récepteur de ligne (9, 9′), le circuit d'isolement (11, 11′) commandant la mise en service ou hors service de cet émetteur-récepteur (9, 9′).

7. Dispositif conforme à la revendication 3, caractérisé en ce que le circuit (12, 12′) de génération de signaux de réveil engendre une séquence d'impulsions, en ce que le circuit de couplage (14, 14′) comprend un moyen (T1) pour moduler, sous la commande de cette séquence, le courant circulant dans la ligne (D̅A̅T̅A̅) du bus de données utilisée pour l'alimentation d'une partie du module en période de veille, le circuit de détection (12, 12′) étant sensible à ce courant modulé pour transmettre à l'unité centrale une information de réveil.

8. Dispositif conforme à la revendication 7, caractérisé en ce que le moyen de modulation est un transistor (T1) dont le circuit émetteur-collecteur est connecté entre la masse et la ligne du bus de données (7) qui sert de ligne d'alimentation en période de veille, le circuit (12, 12′) de génération de signaux de réveil commandant la base de ce transistor (T1) pour moduler le courant dans cette ligne.

9. Dispositif conforme à la revendication 8, caractérisé en ce que la séquence d'impulsions émise par un module et particulière à celui-ci et en ce que l'unité centrale (5) comprend des moyens d'identification du module émetteur de la séquence, à partir des signaux (IMP) reçus du circuit de détection (12, 12′).

10. Dispositif conforme à l'une quelconque des revendications 3 à 9, caractérisé en ce que le circuit de couplage (14, 14′) est sensible à la coupure d'alimentation de la ligne commune (2) pour commander l'initialisation du circuit de génération de signaux de réveil (12, 12′).

11. Dispositif conforme à l'une quelconque des revendications 3 à 10, caractérisé en ce que ledit moyen pour déclencher sélectivement un circuit (12, 12′) de génération de signaux de réveil est constitué par un interrupteur (13, 13′) dont le basculement commande l'excitation de ce circuit, le basculement de cet interrupteur étant déclenché par une action impliquant un réveil du dispositif.

12. Dispositif conforme à la revendication 11, adaptée à une installation dans un véhicule automobile, caractérisé en ce que ledit interrupteur (13, 13′) est basculé par l'introduction d'une clé de contact dans une serrure, préalable au démarrage du véhicule.

## Claims

1. A control device for the electrical supply of a plurality of electronic modules (M1, M2) interconnected by a data bus (7) with a central data processing unit (5), of the type comprising a common electrical supply line (2) for the modules, characterised in that it comprises means installed in the central unit (5) and sensitive to a predetermined state of the device in order to control its transition into a waiting state by cutting off the supply to the modules (M1, M2) from the common line (2) and then providing for the electrical supply of at least one re-actuation signal generation circuit (12, 12′) forming part of a module by means of at least one data bus line (DATA), and means (15, 16, 5) sensitive to the re-actuation signals transmitted by the circuit (12, 12′) generating these signals, in order to cut off the supply to the modules from the data bus (7) and to re-establish the supply to the modules from the common electrical supply line (2).

2. A device as claimed in claim 1, characterised in that the central unit (5) comprises software means for detecting a waiting state by processing information transmitted from the modules and transmitted to the central unit (5) by the data bus (7).

3. A device as claimed in claim 2, characterised in that at least one of the modules comprises means (13, 13′) for selectively triggering an associated re-actuation signal generation circuit (12, 12′), a coupling circuit (14, 14′) associated with this generation circuit for transmitting these signals to the data bus (7) and a detection circuit (15) interposed between the bus (7) and the central unit (5) and sensitive to these signals in order to transmit an instruction to re-actuate the device to the central unit (5).

4. A device as claimed in claim 3, characterised in that it comprises a voltage regulator (19) brought into operation by the central unit (5) when the supply to the modules from the common supply line (2) is cut off, in order to supply the detection circuit (12, 12′) and, via the data bus (7), the coupling circuit (14, 14′) and the re-actuation signal generation circuit (12, 12′) of each module equipped with these circuits.

5. A device as claimed in any one of claims 3 and 4, characterised in that each of these modules (M1, M2) further comprises a circuit (11, 11′), controlled by the transition to the waiting state of the device, in order to isolate the remainder of the module from the supply then provided by the data bus (7).

6. A device as claimed in claim 5, characterised in that each of the modules (M1, M2) comprises a protocol controller (6, 6′) interconnected with the data bus (7) by means of a line transmitter-receiver (9, 9′), the isolation circuit (11, 11′) controlling the actuation or disactivation of this transmitter-receiver (9, 9′).

7. A device as claimed in claim 3, characterised in that the re-actuation signal generation circuit (12, 12′) generates a pulse sequence, in that the coupling circuit (14, 14′) comprises a means (T1) for modulating, under the control of this sequence, the current circulating in the line (DATA) of the data bus used for the supply of a part of the module in the waiting state, the detection circuit (12, 12′) being sensitive to this modulated current in order to transmit a re-actuation instruction to the central unit.

8. A device as claimed in claim 7, characterised in that the modulation means is a transistor (T1) whose emitter-collector circuit is connected between earth and the line of the data bus (7) acting as a supply line in the waiting state and in that the re-actuation signal generation circuit (12, 12′) controls the base of this transistor (T1) in order to modulate the current in this line.

9. A device as claimed in claim 8, characterised in that the pulse sequence transmitted by a module is specific thereto and in that the central unit (5) comprises means for identifying the module transmitting the sequence from the signals (IMP) received from the detection circuit (12, 12′).

10. A device as claimed in any one of claims 3 to 9, characterised in that the coupling circuit (14, 14′) is sensitive to the discontinuation of the supply from the common line (2) in order to control the initialisation of the re-actuation signal generation circuit (12, 12′).

11. A device as claimed in any one of claims 3 to 10, characterised in that the means for selectively triggering a re-actuation signal generation circuit (12, 12′) is formed by a switch (13, 13′) whose switching controls the excitation of this circuit and in that the switching of this switch is triggered by an action indicative of a re-actuation of the device.

12. A device as claimed in claim 11, adapted to be installed in an automobile vehicle, characterised in that the switch (13, 13′) is switched by the insertion of a contact key into a lock, prior to the starting of the vehicle.

## Patentansprüche

1. Vorrichtung zur Steuerung der elektrischen Versorgung einer Vielzahl elektronischer Module (M1, M2), die über einen Datenbus (7) mit einer zentralen Datenverarbeitungseinheit (5) verbunden sind, die eine gemeinsame elektrische Versorgungsleitung (2) für die Module aufweist, dadurch gekennzeichnet, daß sie eine in der zentralen Einheit (5) eingebaute Anordnung aufweist, welche auf einen vorgegebenen Zustand der Vorrichtung reagiert zur Überführung in den Überwachungszustand durch Unterbrechen der Versorgung der Module (M1, M2) über die gemeinsame Leitung (2) und dadurch Sicherstellung der elektrischen Versorgung wenigstens eines Schaltkreises (12, 12′) zur Erzeugung von Einschaltsignalen, welcher Teil eines Moduls ist, mittels wenigstens einer Datenbusleitung (D̅A̅T̅A̅) sowie eine Anordnung (15, 16, 5) aufweist, die auf die vom Schaltkreis (12, 12′) zur Erzeugung dieser Signale abgegebenen Einschaltsignale reagiert, um die Versorgung der Module über den Datenbus (7) zu unterbrechen und die Versorgung der Module über die gemeinsame elektrische Versorgungsleitung (2) wiederherzustellen.

2. Vorrichtung nach Anspruch 1, dadurch gekennzeichnet, daß die zentrale Einheit (5) programmierte Schaltungen aufweist, um einen Überwachungszustand festzustellen, ausgehend von einer Verarbeitung von Informationen, welche von den Modulen abgegeben werden und der zentralen Einheit (5) über den Datenbus (7) zugeführt werden.

3. Vorrichtung nach Anspruch 2, dadurch gekennzeichnet, daß wenigstens eines der Module eine Anordnung (13, 13′) aufweist, um wahlweise einen zugeordneten Schaltkreis (12, 12′) zur Erzeugung von Einschaltsignalen auszulösen, einen Kopplungsschaltkreis (14, 14′) aufweist, der diesem Schaltkreis zur Erzeugung zugeordnet ist, um diese Signale dem Datenbus (7) zuzuführen und einen Meaßchaltkreis (15) aufweist, der zwischen dem Bus (7) und der zentralen Einheit (5) vorgesehen ist und der auf diese Signale reagiert, um der zentralen Einheit (5) eine Steuerinformation für das Einschalten der Vorrichtung zuzuführen.

4. Vorrichtung nach Anspruch 3, dadurch gekennzeichnet, daß sie einen Spannungsregler (19) aufweist, der durch die zentrale Einheit (5) beim Unterbrechen der Versorgung der Module durch die gemeinsame Versorgungsleitung (2) eingeschaltet wird, um den Meißschaltkreis (15) zu versorgen und über den Datenbus (7) den Kopplungsschaltkreis (14, 14′) sowie den Schaltkreis (12, 12′) zur Erzeugung der Einschaltsignale für jedes mit derartigen Schaltkreisen versehene Modul.

5. Vorrichtung nach einem der Ansprüche 3 und 4, dadurch gekennzeichnet, daß jedes der Module (M1, M2) außerdem einen Schaltkreis (11, 11′) aufweist, der durch den Übergang in den Überwachungszustand der Vorrichtung angesteuert wird, um den Rest des Moduls von der durch den Datenbus (7) realisierten Versorgung zu isolieren.

6. Vorrichtung nach Anspruch 5, dadurch gekennzeichnet, daß jedes der Module (M1, M2) eine Kontrollschaltung (6, 6′) aufweist, die mit dem Datenbus (7) über einen Sender-Empfänger (9, 9′) verbunden ist, wobei der Isolierschaltkreis (11, 11′) das Einschalten oder Ausschalten dieses Sender-Empfängers (9, 9′) ansteuert.

7. Vorrichtung nach Anspruch 3, dadurch gekennzeichnet, daß der Schaltkreis (12, 12′) zur Erzeugung der Einschaltsignale eine Impulsfolge erzeugt und daß der Kopplungsschaltkreis (14, 14′) eine Anordnung (T1) aufweist, um unter der Steuerung dieser Folge den in der Datenbusleitung (D̅A̅T̅A̅) fließenden Strom zu modulieren, welcher zur Versorgung eines Teils des Moduls im Überwachungszustand verwendet wird, wobei der Meßschaltkreis (15) auf diesen modulierten Strom reagiert, um der zentralen Einheit eine Einschaltinformation zuzuführen.

8. Vorrichtung nach Anspruch 7, dadurch gekennzeichnet, daß die Modulationsanordnung ein Transistor (T1) ist, dessen Emitter-Kollektor-Schaltkreis zwischen der Masse und der Datenbusleitung (7) angeschlossen ist, die als Versorgungsleitung wahrend der Überwachungsperiode dient, wobei der Schaltkreis (12, 12′) zur Erzeugung der Einschaltsignale die Basis des Transistors (T1) steuert, um den Strom in der Leitung zu modulieren.

9. Vorrichtung nach Anspruch 8, dadurch gekennzeichnet, daß die von einem Modul abgegebene Impulsfolge für dieses eigenartig ist und daß die zentrale Einheit (5) eine Anordnung aufweist zur Identifizierung des die Folge abgebenden Moduls, ausgehend von Signalen (IMP), die vom Meßschaltkreis (15) stammen.

10. Vorrichtung nach einem der Ansprüche 3 bis 9, dadurch gekennzeichnet, daß der Kopplungsschaltkreis (14, 14′) auf die Unterbrechung der Versorgung der gemeinsamen Leitung (2) reagiert, um den Schaltkreis (12, 12′) zur Erzeugung der Einschaltsignale einzuschalten.

11. Vorrichtung nach einem der Ansprüche 3 bis 10, dadurch gekennzeichnet, daß die Anordnung zur wahlweisen Auslösung eines Schaltkreises (12, 12′) zur Erzeugung der Einschaltsignale aus einem Unterbrecher (13, 13′) besteht, dessen Umschaltung die Einschaltung dieses Schaltkreises bewirkt, wobei die Umschaltung dieses Unterbrechers durch eine Aktion ausgelöst wird, welche ein Einschalten der Vorrichtung beinhaltet.

12. Vorrichtung nach Anspruch 11, angepaßt an das Netz in einem Kraftfahrzeug, dadurch gekennzeichnet, daß der Unterbrecher (13, 13′) umgeschaltet wird durch die Einfführung eines Zündschlüssels in ein Zündschloß vor dem Starten des Fahrzeuges.
